# EUROPÄISCHE PATENTSCHRIFT

(11) **EP 2 206 318 B1**
(45) Veröffentlichungstag und Bekanntmachung des Hinweises auf die Patenterteilung: **29.05.2013**
(21) Anmeldenummer: 08801279.4
(22) Anmeldetag: 03.09.2008
(51) Int. Cl.: H04L 29/08

(54) **VERFAHREN ZUR KOMMUNIKATIONSSTEUERUNG**
COMMUNICATION CONTROL METHOD
PROCÉDÉ DE COMMANDE DE COMMUNICATION

(30) Priorität: 25.09.2007 DE 102007045894
(43) Veröffentlichungstag der Anmeldung: 14.07.2010
(73) Patentinhaber: Mobotix AG, 67657 Kaiserslautern (DE)
(72) Erfinder: GABEL, Oliver, 66879 Reichenbach-Steegen (DE)
(74) Vertreter: Pietruk, Claus Peter
(86) Internationale Anmeldenummer: PCT/DE2008/001472
(87) Internationale Veröffentlichungsnummer: WO 2009/039818

(56) Entgegenhaltungen:
- EP-A- 1 818 873
- US-A1- 2004 008 253
- US-A1- 2007 142 050
- US-A1- 2007 155 360
- US-B1- 6 429 812

## Beschreibung

Die vorliegende Erfindung betrifft das oberbegrifflich Beanspruchte und bezieht sich somit auf die Kommunikation zwischen Daten austauschenden Einheiten.

Es gibt eine Vielzahl von Anwendungen, in denen Daten austauschende Einheiten miteinander kommunizieren müssen. Oftmals ist dabei eine der Einheiten mobil, während die andere ortsfest ist. Dies gilt beispielsweise für Laptops, die mit wechselnden WLAN-Netzen, etwa einerseits an einer Arbeitsstelle und andererseits im privaten Wohnbereich verbunden werden müssen; genauso gilt dies aber beispielsweise für Transportfahrzeuge, die während einer Fahrt Daten erfassen und dann an einer festgelegten Stelle wie einer Endstation die Daten übertragen sollen. Dabei ist es wünschenswert, dass Daten ausschließlich dann übertragen werden, wenn sich die mobile Einheit in der Nähe einer korrekten ortsfesten Einheit befindet. Dies stellt zum einen sicher, dass die Möglichkeit eines nicht-autorisierten Zugriffes auf die mobile Dateneinheit verringert ist, was die Datensicherheit erhöht. Zum anderen ist gegebenenfalls der Energieverbrauch einer mobilen Einheit schon deshalb verringert, weil sie nicht ständig in vollem Umfang betrieben werden muss.

Aus der DE 10 2005 022 762 ist ein Kommunikationsendgerät bekannt, das einen Speicher aufweist, in welchem für mindestens ein WLAN-Kommunikationsnetzwerk gespeichert ist, an welchen geographischen Positionen ein WLAN-Kommunikationsnetzwerk verfügbar ist und dessen WLAN-Funkmodul zum Aufbau einer Funk-Kommunikationsverbindung zwischen dem WLAN-Funkmodul und einem WLAN-Kommunikationsnetzwerk aktiviert wird, wenn, basierend auf der aktuellen geographischen Position, ermittelt wird, dass ein WLAN-Kommunikationsnetzwerk verfügbar ist. Es wird angegeben, dass die geographische Position durch Empfang und entsprechende Verarbeitung von GPS-(Global Positioning System)-Signalen oder unter Verwendung anderer Systeme zur Positionsbestimmung bestimmt werden kann. Es wird überdies angegeben, dass das Kommunikationsendgerät nach Überprüfung seiner geographischen Position anhand der im Speicher vorhandenen Informationen überprüfen soll, wo das WLAN-Kommunikations-netzwerk verfügbar ist und nur in dem Fall, dass ein WLAN-Kommunikationsnetzwerk verfügbar ist, das WLAN-Funkmodul aktiviert und einen Versuch startet, eine Funk-Kommunikationsverbindung zu dem WLAN-Kommunikationsnetzwerk aufzubauen.

Aus der DE 203 10 113 U1 ist eine Anordnung bekannt, die WLAN- und UMTS-Systeme betrifft und sich mit dem Übergabevorgang zwischen einem UMTS- und einem WLAN-System befasst.

Aus der WO 2005/022937 A1 ist ein Verfahren zur Verbesserung des WLAN-Übergabeverhaltens bei Eingangs-/Austrittspunkten bekannt.

Verwiesen sei auch auf die US 2004/0008253 A1, die EP 1 818 873 A1, die US 6,429,812 B1, die US 2007/0142050 A1 und die US 2007/0155360 A1, die sich mit Kommunikationsvorrichtungen befassen.

Problematisch bei komplexen Systemen ist häufig, dass eine Vielzahl von Kommunikationsversuchen bei nur begrenzter Bandbreite behandelt werden muss. Es ist wünschenswert, auch bei komplexen Systemen eine Kommunikation zwischen einer ortsfesten und zumindest einer mobilen Daten austauschenden Einheit verbessern zu können. Die Systeme können durch das Vorhandensein einer Vielzahl mobiler, Daten austauschender Einheiten und/oder durch eine Vielzahl ortsfester Einheiten besonders komplex sein, wobei gleichwohl eine Optimierung des Kommunikationsverhaltens angestrebt wird.

Die Aufgabe der vorliegenden Erfindung besteht darin, Neues für die gewerbliche Anwendung bereitzustellen.

Die Lösung dieser Aufgabe wird in unabhängiger Form beansprucht. Bevorzugte Ausführungsformen finden sich in den Unteransprüchen.

Ein erster Grundgedanke der vorliegenden Erfindung ist somit in dem Vorschlag zu sehen, dass bei einem Verfahren zur Kommunikationssteuerung zwischen mindestens einer ortsfesten und mindestens einer mobilen Daten austauschenden Einheit vorgesehen ist, dass eine Position der mobilen Einheit bestimmt und im Ansprechen darauf eine Kommunikation ermöglicht wird, wobei im Ansprechen auf die bestimmte Position ein Prioritätsmaß ermittelt und die Datenübertragung von der mobilen Daten austauschenden Einheit prioritätsgemäß ermöglicht wird. Ein Grundgedanke der vorliegenden Erfindung liegt somit in der Erkenntnis, dass bereits die ermittelte Position selbst ausreichen kann, um nicht nur eine Datenübertragung per se zuzulassen oder abzulehnen, sondern darüber hinaus prioritätsmäßig zu steuern.

So ist es etwa möglich, bei Erreichen einer bestimmten Position zu ermitteln, ob eine Übertragung derzeit auch von anderen Einheiten gewünscht wird, um dann die Datenübertragung entsprechend anzupassen. Dies geschieht nicht aufgrund der Ermittlung einer gegebenen Bandbreite, die zur Verfügung steht und wie bei herkömmlichen Netzen mehr oder minder gleichmäßig zwischen Sender und Empfänger aufgeteilt wird, sondern es wird umgekehrt vielmehr abgefragt, ob andere Einheiten vorhanden sind, die gleichfalls übertragen wollen oder sollen, und es wird unter diesen Einheiten eine bewusste Priorisierung vorgenommen. Dies ist beispielsweise sinnvoll, wenn mehrere mobile Einheiten Daten aus Personen transportierenden Eisenbahnwaggons an eine feste Einheit in einem Bahnhof übertragen sollen, um diese Daten zu Wartungszwecken bereitzustellen usw. Es kann zunächst erfasst werden, dass der Zug in einem Bahnhof eingelaufen ist, das heißt es wird die Position der mobilen Einheit im Zug bestimmt. Im Ansprechen auf das Erreichen des Bahnhofes wird dann eine Kommunikation ermöglicht, um die Daten an eine Zentrale oder ähnliches zu übertragen. Dies kann bei langen Zügen, wenn große Datenmengen in den einzelnen Waggons angefallen sind, während eines nur kurzen Bahnhofaufenthaltes nicht für alle Waggons vollständig geschehen. Es wird deshalb beispielsweise von allen zur Übertragung bereiten Eisenbahnwaggons zunächst nur eine kurze Information an eine zentrale Einheit übertragen, die die Nummer des Waggons angibt und ein vom Waggon selbst erzeugtes Prioritätsmaß für die Datenübertragung. So kann eine Priorität vom übertragenden Waggon selbst niedrig angesetzt werden, wenn keine besonderen Vorkommnisse aufgetreten sind, sie kann auf ein mittleres Prioritätsmaß gesetzt werden, wenn geringfügige Wartungsarbeiten, beispielsweise das Nachfüllen von Brauchwasser für Toilettenanlagen erforderlich ist, und sie kann sehr hoch angesetzt werden, wenn Daten angeben, dass eine Fehlfunktion z. B. in Bremsen aufgetreten ist, die womöglich den Fahrbetrieb signifikant stört oder gefährdet. Dies setzt im übrigen eine hier mögliche und bevorzugte Prioritätsbewertung einzelner Ereignisse in den mobilen Einheiten voraus, wobei in die Priorisierung auch der Füllgrad eines Datenspeichers, das Alter von Daten usw. einfließen.

Die zentrale Einheit, an welche zunächst die Waggonkennzahlen und das aktuelle Prioritätsmaß übertragen werden, kann dann für alle Waggons außer jenem mit der höchsten Priorität die Übertragung blocken, so dass die kritischen Daten sofort übertragen werden, während weniger kritische Daten zurückgehalten werden. Wenn der Aufenthalt in einem Bahnhof dann so lange andauert, dass sämtliche Daten aus dem entsprechenden Waggon vollständig übertragen werden konnten, kann dem Waggon von der Zentraleinheit mitgeteilt werden und/oder der Waggon der Zentrale mitteilen, dass die Datenübertragung beendet ist, seine Priorität wird zurückgesetzt, der Waggon wird eine Marke setzen, so dass bei einem nächsten Halt nur die zwischenzeitlich zusätzlich aufgelaufenen Daten übertragen werden müssen, die wiederum mit einem neuen Prioritätsmaß versehen sein können und es kann gegebenenfalls mit der Übertragung von hoch priorisierter Daten aus anderen Waggons begonnen werden. Es sei darauf hingewiesen, dass in einem solchen Fall die Daten aus einem Waggon, die bereits übertragen wurden, nicht gelöscht werden müssen, sondern bevorzugt weiterhin im Waggon verfügbar bleiben, um etwa bei größeren Wartungsarbeiten in einer Zentralstation sofort sämtliche Daten lokal verfügbar zu haben.

Wenn hingegen der Bahnhofsaufenthalt so kurz war, dass eine Übertragung unterbrochen werden musste, bevor der Zug sich erneut in Bewegung gesetzt hat, kann in dem entsprechenden Waggon eine Marke gesetzt werden, welche Daten bereits übertragen wurden und es kann im nächsten Bahnhof, gegebenenfalls nach entsprechender Konkurrenz nach dem beschriebenen Prioritätsprinzip, die Übertragung von Daten fortgesetzt werden. Auch können im übrigen einzelne hochpriorisierte Daten, beispielsweise solche, die auf Bremsdefekte hinweisen, ihrerseits bei der Übertragung priorisiert werden, so dass womöglich kein vollständiger Datensatz übertragen wird, auch wenn dies bevorzugt ist. Daher ist es einsichtigerweise möglich, sukzessive Waggons mehrfach aufzurufen, um von allen Waggons besonders hoch priorisierte Informationen zuerst abzurufen, z. B. um alle Informationen über defekte Bremsen schnellstmöglich zu ermitteln, auch wenn in unterschiedlichen Waggons solche Defekte auftreten.

Eine andere Anwendung besteht in Busdepots, das heißt großen zentralen Busbahnhöfen von Städten und dergleichen, wo nachts die Busse abgestellt werden und Wartungsarbeiten erfolgen. Wenn in den Bussen Daten sowohl über die Fahrzeuge als auch über das Passagieraufkommen gesammelt werden, können diese erfindungsgemäß ohne Eingriff von außen per Funk an eine Zentraleinheit übertragen werden. Die für eine Simultanübertragung aus allen Bussen erforderliche Bandbreite ist jedoch nicht realisierbar. Um nun einerseits den Energieaufwand für das Übertragen der Daten zu reduzieren und andererseits sicherzustellen, dass alle Daten ordnungsgemäß übertragen werden, kann beispielsweise in dem Augenblick, in welchem ein Bus im Busbahnhof einläuft, was anhand seiner Position über eine entsprechende Einheit erfasst werden kann, eine Kommunikation zu einer ortsfesten Zentrale im Busbahnhof kurzfristig aufgebaut werden, um abzufragen, ob noch andere Busse auf Datenübertragung warten. In gleicher Weise wäre übrigens abfragbar, ob ein anderer Bus bereits sendet oder auf eine Übertragungsmöglichkeit wartet. Sofern dies nicht der Fall ist, kann sofort mit der Datenübertragung begonnen werden. Andernfalls kann zwischen der mobilen, Daten austauschenden Einheit im Bus, mit welcher Fahrzeug- und Passagierdaten gesammelt wurden, und der Zentraleinheit im Busbahnhof ausgehandelt werden, wie bedeutsam die Übertragung der Daten für den einzelnen Bus momentan ist. Die Priorität kann besonders hoch angesetzt werden, wenn so viele Busse im Depot stehen, dass eine Übertragung nicht täglich in Frage kommt und der Speicher im Fahrzeug bereits nahezu seine maximale Speicherkapazität erreicht hat, Daten also für künftige Aufzeichnungen überschrieben werden müssen.

Die Datenübertragung kann auch sehr hoch angesetzt werden, wenn der Bus auf Grund von Defekten unbedingt gewartet werden sollte und statt seiner am Folgetag vor Weiterbenutzung ein anderer Bus verwendet werden sollte.

Eine hohe Priorität kann auch gesetzt werden, wenn beispielsweise das Fahrzeuginnere mit einer oder mehreren Kameras überwacht wurde und während wenigstens einer Fahrt Unregelmäßigkeiten wie Überfälle oder dergleichen aufgetreten sind, die einen sofortigen Zugriff auf die Bilddaten erforderlich machen. Dies kann durch automatische Bildanalyse oder bevorzugt manuell signalisiert werden. Bei manueller Priorisierung zum Beispiel durch den Fahrer sind bevorzugt auch Zusatzinformationen, zum Beispiel über Motorgeräusche etc., mit überspielbar. Wenn keine die Priorität erhöhenden Faktoren gegeben sind, kann die Priorität für die Datenübertragung sich einfach danach bestimmen, welche Busse vor dem jeweiligen Fahrzeug angekommen sind und es wird dann die Übertragung zurückgestellt, bis die prioritätshöheren Fahrzeuge abgefragt wurden. Auf diese Weise steht dem einzelnen Bus jeweils die volle Bandbreite für die Datenübertragung zur Verfügung, ohne dass eine weitere Kommunikationsverwaltung erfolgen muss.

Es kann auch vorgesehen sein, dass gegebenenfalls eine Kanalsplittung der Gesamtübertragungskanäle erfolgt, etwa dann, wenn von zwei Bussen sehr wichtige Daten übertragen werden müssen, während die Übertragung von anderen Fahrzeugen noch warten kann.

Prinzipiell wird die Datenübertragung nur mit einer begrenzten Datenübertragungsrate erfolgen können.

Typisch ist die Übertragungsrate deshalb begrenzt, weil die Kanäle, die für die Übertragung zur Verfügung stehen, hinsichtlich der Übertragungsbandbreite begrenzt sind.

Es ist besonders bevorzugt, wenn eine Mehrzahl ortsfester Einheiten vorgesehen sind, mit denen eine einzelne mobile Einheit kommunizieren kann. Dies ist etwa dann der Fall, wenn die ortsfesten Einheiten in Bahnhöfen angeordnet sind. Die ortsfesten Einheiten ihrerseits können dann wieder mit einer Zentraleinheit kommunizieren, wobei einsichtig sein wird, dass die Bandbreitenbegrenzung typisch auf Grund der Übertragung zwischen mobiler und ortsfester Einheit und nicht auf Grund der Übertragung zwischen ortsfesten Einheit und Zentraleinheit bandbreitenbegrenzt ist.

Die mobile Einheit kann auf einem Personentransportmittel angeordnet sein, während die ortsfesten Einheiten an typischen Haltestellen angeordnet sind. Dies kann einerseits, wie beispielhaft dargelegt, im Bahnverkehr der Fall sein, wo ortsfeste Einheiten an Bahnhöfen vorgesehen sind; dies kann auch bei Omnibussen an Haltestellen, insbesondere Endhaltestellen der Fall sein, oder an Taxiständen usw. Es versteht sich aber im übrigen, dass, obwohl oben von einem Busbahnhof die Rede war, in den mehrere Busse einfahren, analoge Anwendungen zum Beispiel in Speditionen usw. möglich sind.

Eine besonders bevorzugte Anwendung sind Sicherheitstransporte, da bei diesen die Erfassung der geographischen Position bereits eine besondere Bedeutung besitzt. Es kann, gerade hier, aber auch in anderen Anwendungsfällen, eine mehrstufige Bestimmung der Position erfolgen. So kann beispielsweise zunächst die Position eines Fahrzeuges oder einer mobilen Einheit grob durch ein GPS (Global Positioning System) erfolgen. Wenn die GPS-Daten darauf hindeuten, dass sich ein Fahrzeug in der Nähe seines Depots oder eines Bahnhofs befindet, kann mit einem anderen Detektionsverfahren ermittelt werden, ob das Fahrzeug an der grob per GPS bestimmten Position bereits in eine Soll-Position gefahren wurde, beispielsweise ob ein Zug seine Halteposition im Bahnhof erreicht hat oder ein Omnibus bereits an einem vorgegebenen Parkplatz im Depot steht. Diese Kontrolle kann auf andere Weise erfolgen als die Bestimmung des GPS-Signals, beispielsweise optisch durch Abtasten und Erkennen bestimmter Marken, durch magnetische Induktion usw.

Es ist besonders bevorzugt, wenn zumindest eine Positionsbestimmung so erfolgt, dass die Position nur schwer gefälscht werden kann, was offensichtlich bei GPS-Daten der Fall ist. Um hier eine noch größere Sicherheit zu erhalten, ist es auch wünschenswert, die Historie der Position aufzuzeichnen und gegebenenfalls eine Übertragung nur dann ohne weiteres freizugeben, wenn die Position, an der die Übertragung erfolgen sollte, über einen bestimmten Weg erreicht wurde. Dies kann einsichtigerweise auch ohne vorherigen Ausfall der Positionsbestimmung vorgesehen werden, ist aber zumindest dann besonders bevorzugt, wenn die Daten vor unbefugter Abfrage besonders geschützt werden sollen und befürchtet werden muss, dass einem Fahrzeug beziehungsweise der darin befindlichen mobilen Einheit falsche Positionen vorgetäuscht werden. In einem solchen Fall reicht es nicht mehr, für die Datenübertragung nur die korrekte Endposition einzuspeisen, sondern es muss vielmehr ein plausibler Weg vorgegeben werden, was signifikant schwieriger ist, da ein solcher insbesondere selbst dann, wenn einem Dritten, der unbefugt auf Daten zugreifen möchte, bekannt wäre, dass eine korrekte Position zur Freigabe einer Datenübertragung erreicht sein muss, nicht bekannt zu sein braucht.

Es ist im übrigen möglich, eine Priorisierung so vorzunehmen, dass ein bestimmter Übertragungszeitraum beziehungsweise ein Zeitraum eines - eventuell möglichen - Übertragungsbeginnes vorgegeben wird. Dies kann etwa bei dem einleitend erwähnten Beispiel eines Busdepots deshalb vorteilhaft sein, weil dann, wenn viele Fahrzeuge bereits im Depot stehen, deren Übertragung einige Zeit in Anspruch nehmen wird, nicht einmal dauernd Zwischenabfragen erforderlich sind, ob mittlerweile eine Übertragung möglich ist. Die Einheit in einem später ankommenden Bus kann dann nämlich für einen nicht unerheblich langen Zeitraum vollständig abgeschaltet werden.

Es ist im übrigen möglich, auch nach Erreichen einer Grobposition noch zusätzlich eine weitere Positionsbestimmung vorzunehmen. Abhängig davon, wo sich die mobile Einheit in jenem Gebiet, in dem überhaupt eine Datenübertragung per se erwogen wird, exakt befindet, kann dann anhand der exakteren Positionsbestimmung festgelegt werden, mit welcher Datenrate übertragen werden soll. So kann beispielsweise dann, wenn ein Bus direkt auf eine Werkstattgrube gefahren wird, dort eine erhöhte Übertragung zugelassen werden, während zeitgleich dicht an der Werkstattgrube geparkte Omnibusse Daten allmählich abgeben. Dies hilft bei der Wartung eines Fahrzeuges mit klar erkanntem Defekt. Die weitere Positionsbestimmung kann zum Beispiel optisch, per Induktionsschleife oder ähnlich erfolgen.

Entsprechende Vorgehensweisen sind auch für Geldtransporte möglich, bei denen Wertgegenstände in einen Tresor verbracht werden müssen, was typisch nur von einer einzigen Stelle aus möglich ist, während abgestellte Sicherheitstransporter nahe diesem Übergabepunkt für ihren nächsten Einsatz geparkt werden.

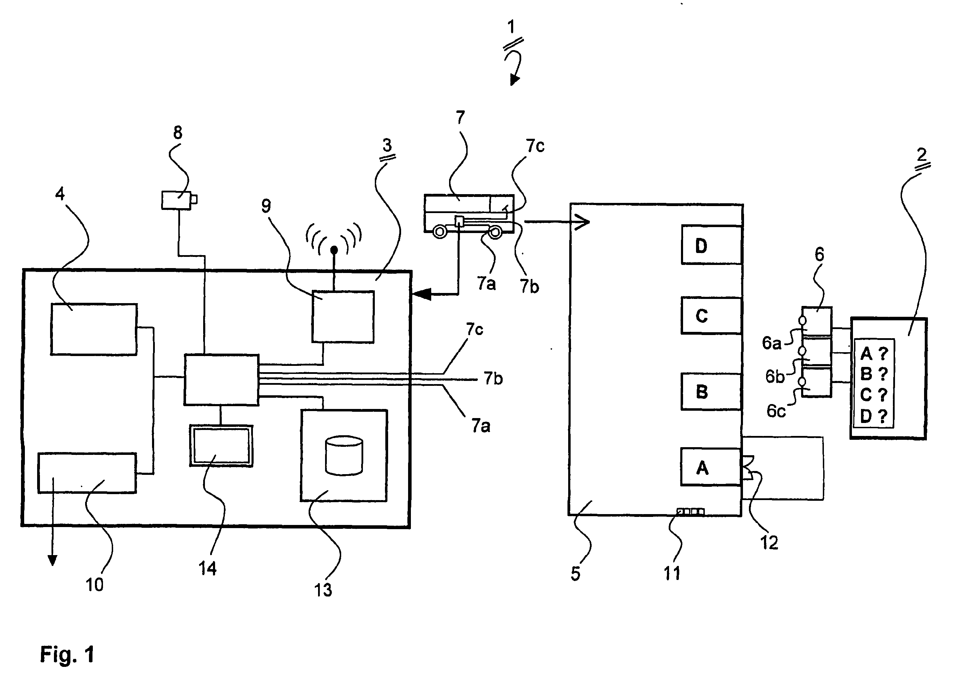

Die Erfindung wird im Folgenden nur beispielsweise anhand der Zeichnung gezeigt. In dieser ist dargestellt durch
- Fig. 1: ein System zur Kommunikationssteuerung zwischen einer an einem Fahrzeug befindlichen mobilen und einer in einem Fahrzeugdepot befindlichen ortsfesten Daten austauschenden Einheit.

Nach Fig. 1 umfasst ein allgemein mit 1 bezeichnetes System mindestens eine ortsfeste, Daten austauschende Einheit 2 und eine mobile, Daten austauschende Einheit 3, wobei ein Mittel 4 zur Bestimmung der Position der mobilen Einheit vorgesehen ist und wobei die Anordnung dazu bestimmt und ausgebildet ist, dass zunächst eine Position der mobilen Einheit bestimmt und im Ansprechen darauf eine Kommunikation ermöglicht wird, und zwar dergestalt, dass im Ansprechen auf die bestimmte Position ein Prioritätsmaß ermittelt und die Datenübertragung von der mobilen, Daten austauschenden Einheit 3 prioritätsgemäß ermöglicht wird, wie nachfolgend dargelegt ist.

Die Anordnung 1 ist im dargestellten Ausführungsbeispiel eine Anordnung, mit der an einem Fahrzeugdepot 5, an welchem die ortsfeste, Daten austauschende Einheit 2 vorgesehen ist, eine Vielzahl von Fahrzeugen 7 auf Stellplätze A, B, C, D abgestellt werden können, wobei jedes der Fahrzeuge eine mobile, Daten austauschende Einheit 3 mit sich führt.

Die ortsfeste, Daten austauschende Einheit 2 ist im dargestellten Ausführungsbeispiel durch einen zentralen Server dargestellt, dem eine Vielzahl von Übertragungsmitteln 6, hier mehrere WLAN-Funkempfänger 6a, 6b, 6c für unterschiedliche Frequenzen zugeordnet sind, die so ausgebildet und angeordnet sind, dass Daten von Fahrzeugen empfangen werden können, die auf den Stellplätzen A, B, C, D im Fahrzeugdepot 5 abgestellt sind. Die hier als WLAN-Sender realisierten Übertragungsmittel 6 können so betrieben werden, dass entweder alle Kanäle der Einzelgeräte 6a, 6b, 6c für die Übertragung von einem einzigen Fahrzeug 7 gebündelt werden, oder aber eine Übertragung von mehreren Fahrzeugen simultan erfolgen kann; eine nur partielle Bündelung, etwa nur der Kanäle der Geräte 6a, 6b kann gleichfalls möglich sein. Die Verwendung mit anderen Übertragungsmitteln wie Bluetooth etc. ist einsichtigerweise möglich und sei vollständigkeitshalber erwähnt.

In einer besonders bevorzugten Ausgestaltung ist die Anordnung der Funkübertragungssysteme 6a, 6b, 6c dergestalt, dass zumindest dann, wenn ein Fahrzeug 7 auf dem Stellplatz A im Fahrzeugdepot abgestellt ist, eine gebündelte Übertragung mittels vieler, bevorzugt aller drahtlosen Übertragungseinheiten 6a, 6b, 6c mit höchster Datenrate möglich ist. Gleichwohl sollen diese Einheiten so verteilt sein, dass das ganze Fahrzeugdepot, das heißt jeder einzelne Stellplatz A, B, C, D abgedeckt ist.

Es versteht sich im übrigen, dass weder die Anzahl der mit der ortsfesten, Daten austauschenden Einheit 2 verbundenen Sendeeinheiten 6a, 6b, 6c tatsächlich auf drei beschränkt ist, noch, dass das Fahrzeugdepot für lediglich vier Stellplätze ausgerüstet sein muss. Vielmehr ist einzusehen, dass diese Beschränkung nur aus Gründen der besseren Anschaulichkeit erfolgt.

Die ortsfeste, Daten austauschende Einheit 2 weist in ihrem Server ein Mittel 2a auf, über welches die Kommunikation zwischen im Fahrzeugdepot 5 einfahrenden Fahrzeugen 7 und der ortsfesten, Daten austauschenden Einheit 2 gesteuert werden kann, und zwar abhängig von einer Priorität, die einem jeweiligen Fahrzeug zugeordnet wird, wie noch zu erläutern sein wird. Dieses Mittel 2a kann als Teil eines Kommunikationsprogrammes realisiert sein.

Die mobile, Daten austauschende Einheit 3 ist an den Fahrzeugen 7 so angebracht, dass zunächst Fahrzeugdaten, beispielsweise vom Motor, vom Tachometer und von den Rädern aufgenommen und abgespeichert werden, um einerseits Informationen über die Route und das Abfahren derselben, etwa hinsichtlich der Durchschnittsgeschwindigkeit, Zwischenstopps usw. zu erhalten. Dies ist durch Leitungen 7a, 7b, 7c veranschaulicht, die zum Motor, zu den Rädern und zur Steuerung im dargestellten Ausführungsbeispiel laufen, wo entsprechende Sensoren und Signalkonditionierungsvorrichtungen vorgesehen sein können, die nicht weiter diskutiert werden müssen, da sie nicht den Hauptgegenstand der vorliegenden Erfindung darstellen.

Die mobile, Daten austauschende Einheit 3 ist weiter mit einer oder mehreren Kameras 8 am Fahrzeug verbunden, um von dort Bilder zu empfangen. Die Kamera 8 kann unterschiedliche Bilder bereitstellen, beispielsweise vom Fahrzeuginneren, von der Fahrerkabine, von allen vier Seiten des Fahrzeuges usw. Diese Bilder können in herkömmlicher Weise komprimiert werden; so ist es möglich, nur Änderungen zwischen Bildern einer Kamera abzuspeichern und/oder zusätzlich Informationen mitabzuspeichern, die helfen, bei Sprung auf eine beliebige Stelle in einem Datenstrom die Bilder schnellstmöglich aufzubauen. Entsprechende Anmeldungen sind bereits von der Anmelderin der vorliegenden Anmeldung eingereicht worden und es wird zu Offenbarungszwecken auf diese Bezug genommen.

Weiter weist die mobile, Daten austauschende Einheit 3 eine Einheit 4 zur Erfassung von GPS-Signalen als Mittel 4 zur Bestimmung der Position der mobilen, Daten austauschenden Einheit auf. Es ist weiter ein Datenübertragungsmittel 9 zur drahtlosen Datenübertragung von der mobilen, Daten austauschenden Einheit 3 vorgesehen, wobei die Datenübertragungseinheit 9 dazu ausgebildet ist, Daten auszutauschen mit den Einheiten 6 im Fahrzeugdepot 5 beziehungsweise gleichgebildeten, das heißt über ein gleiches Protokoll kommunizierenden Einheiten. Dass die Datenübertragungseinheiten 9 und/oder 6 multiprotokollfähig sein können, sei erwähnt.

Die mobile, Daten austauschende Einheit 3 ist weiter mit einem Mittel zur optischen Mustererkennung 10 versehen, das hier als Barcodeleser realisiert ist, ansonsten aber zum Beispiel auch als zusätzliche Kamera realisiert sein kann, insbesondere mit den bereits beschriebenen Kameras 8. Dieses Mustererkennungsmittel 10 dient dazu, eine optische Markierung 11 im Fahrzeugdepot zu erkennen, die anzeigt, dass das Fahrzeug 7 unmittelbar auf dem Stellplatz A abgestellt ist, und zwar in einer Position, wo es durch Türen 12 in einen sicheren Raum entladen werden kann.

Die mobile, Daten austauschende Einheit 3 weist weiter ein Speichermittel 13 auf, in dem während einer Fahrt des Fahrzeugs 7 gesammelte Daten gespeichert werden können, bis eine Übertragung zugelassen wird.

Es ist weiter in der mobilen, Daten austauschenden Einheit 3 ein Prioritätserkennungsmittel 14 vorgesehen, das insbesondere erfasst, ob bestimmte Ereignisse rechtfertigen, dass eine Übertragung von Daten der mobilen, Daten austauschenden Einheit 3 an die ortsfeste Einheit 2 bei Erreichen des Fahrzeugdepots 5 mit hoher Priorität erfolgt. Als solche Rechtfertigungsgründe für eine Prioritätserhöhung der Datenübertragung seien vorliegend nur beispielhaft genannt: das Vorliegen von Fahrzeugdefekten, das erhebliche Abweichen von einer Soll-Route, die zuvor festgelegt wurde und die während der Fahrt mit der Einheit 4 zur Bestimmung der Position überwacht wurde, Bewegungen, die mit der Kamera 8 im Laderaum des Fahrzeuges 7 während der Fahrt erfasst wurden oder Ausfälle der Positionsbestimmung 4.

Die Priorisierungseinheit 14 ist weiter im Stande, nicht nur prioritätsbezogene Informationen selbst anhand von Ereignissen im Fahrzeug 7 zu bestimmen, sondern auch ein Prioritätsmaß von der ortsfesten, Daten austauschenden Einheit 2 zu erhalten und im Ansprechen auf eine verhandelte Priorität 14 eine Datenübertragung über die Datenübertragungseinheit 9 zu steuern.

Die Anordnung wird verwendet wie folgt:
Ein Fahrzeug 7 soll zunächst mit leerem Datenspeicher 13 eine Fahrt aus dem Depot 5 beginnen. Die während der Fahrt gesammelten Daten von dem Mittel zur Bestimmung der während der Fahrt eingenommenen Positionen der mobilen, Daten austauschenden Einheit 3, das heißt Daten über die gefahrene Route, von Bildern aus den Kameras 8 sowie von den Fahrzeugsensoren, die an die Leitungen 7 angeschlossen sind, werden während der Fahrt erfasst und abgespeichert.

Bei der Erfassung wird zugleich festgestellt, ob bestimmte Ereignisse besonders bemerkenswert sind, beispielsweise, weil Abweichungen von der Fahrtroute, ungeplante Zwischenstopps usw. vorgenommen werden. Dies kann durch Auswertung der GPS-Signale vom Mittel 4 zur Bestimmung der Position der mobilen Einheit sowie durch Erfassen und Auswerten der Fahrzeugsensoren 7 geschehen, genauso wie durch Analyse von Bildern aus dem Fahrzeuginneren, beispielsweise dann, wenn ein per se lediglich beladener, aber nicht von Personen während der Fahrt belegter Laderaum umfangreiche Bewegungen zeigt.

Die Daten werden mit der durch die Priorisierungsstufe 14 vorgenommenen Priorisierungsinformation auf dem Speicher 13 abgelegt. Es sei darauf hingewiesen, dass die Priorisierungsstufe durch ein Softwareprogramm erfolgen kann und im übrigen nicht zwingend erforderlich ist, sondern vielmehr auch eine Priorisierung statt dessen und/oder zusätzlich in der Zentrale vorgenommen werden kann, etwa aufgrund von erheblichen Verspätungen eines Fahrzeuges.

Sobald sich das Fahrzeug 7 dem Fahrzeugdepot 5 nähert, im Idealfall dann, wenn es im Fahrzeugdepot 5 einfährt, wird das Mittel zur Bestimmung der Position der mobilen Einheit feststellen, dass das Fahrzeug 7 an einer Stelle angelangt ist, wo Daten übertragen werden sollen. Es sei darauf hingewiesen, dass mehrere Soll-Positionen vorgegeben werden können, etwa dann, wenn das Fahrzeug 7 in unterschiedlichen Depots stationiert werden kann, was bei internationalen Speditionen und dergleichen ohne weiteres der Fall ist.

Auf das Erkennen, dass sich das Fahrzeug 7 dem Fahrzeugdepot 5 angenährt hat, wird die Datenübertragung 9 der mobilen Einheit 3 aktiviert und es erfolgt eine Übertragung einer Fahrzeugkennung an den zentralen Server zusammen mit Information darüber, ob hochpriorisierte, besonders bedeutsame Daten, die schnell und vollständig übertragen werden müssen, während der Fahrt des Fahrzeuges 7 erfasst wurden. Das Fahrzeug kann zugleich auf einem der gleichwertigen Stellplätze B, C, D abgestellt werden. Der Server 2a der ortsfesten Einheit 2 entscheidet dann anhand der übermittelten Informationen vom Fahrzeug 7 sowie, gegebenenfalls anhand von Informationen über weitere, bereits im Depot befindliche Fahrzeuge, ob eine Datenübertragung sofort erfolgen soll, ob einzelne Daten aus dem Fahrzeug 7 sofort übertragen werden müssen oder ob eine bestimmte Reihenfolge im Vergleich zu anderen Fahrzeugen eingehalten und bestimmt werden kann. Es wird also eine Priorisierung der Übertragung von Daten aus der mobilen Einheit 3 des neu hinzugekommenen Fahrzeuges 7 vorgenommen. Die entsprechende Entscheidung über die Priorisierung wird der mobilen Einheit 3 im Fahrzeug 7 auf elektronische Weise mitgeteilt, beispielsweise in Form einer erwarteten Zeitdauer bis zum prognostizierten Beginn einer Übertragung. Die mobile Einheit 3 im Fahrzeug 7 kann so lange, bis der prognostizierte Zeitpunkt oder der prognostizierte Übertragungsbeginn erreicht ist, in einen Stand-by- oder Sleepmodus gehen. Wenn der vermutete Beginn der Übertragung gekommen ist, kann die mobile Einheit 3 sich durch eine interne Zeitsteuerung aktiv schalten und regelmäßig abfragen, ob die prioritätshöheren Datenübertragungen bereits erfolgt sind und somit die eigene Datenübertragung beginnen kann. Es sei darauf hingewiesen, dass eine solche Stand-by- oder Schlafmodusschaltung nicht zwingend erforderlich ist und insbesondere für Fälle implementiert sein kann, in denen längere Wartezeiten bis zum Beginn einer Datenübertragung zu erwarten sind.

Wenn hingegen das Fahrzeug 7 entladen werden muss, beispielsweise weil Wertgegenstände im Fahrzeug 7 vorhanden sind, die in einen Tresor im Raum hinter den Türen 12 überbracht werden müssen, wird der Fahrer des Fahrzeuges 7 den Stellplatz A anfahren. Dabei wird mit dem Mittel zur optischen Mustererkennung ein Muster 11 im Fahrzeugdepot nahe dem Stellplatz A erkannt werden, so dass im Fahrzeug in der mobilen Einheit 3 durch diese zusätzliche, exaktere Bestimmung der Position, hier nämlich hinsichtlich des tatsächlich eingenommenen Stellplatzes, erkannt wird, dass mit dem Ausladen auch eine sofortige Übertragung von Daten aus der mobilen Einheit des auf dem Stellplatz A abgestellten Fahrzeuges 7 gewünscht ist. Es wird dies dem Server 2 mitgeteilt, der damit erkennt, dass eine hochpriorisierte Datenübertragung erforderlich ist, daraufhin gegebenenfalls bereits laufende Datenübertragungen unterbricht oder deren Bandbreite verringert und zugleich mit der Übertragung von Daten des auf dem Stellplatz A abgestellten Fahrzeuges 7 beginnt.

## Patentansprüche

1. Verfahren zur sicheren Kommunikationssteuerung zwischen mindestens einer ortsfesten (2) und mindestens einer mobilen (3), Daten austauschenden Einheit, wobei eine Position der mobilen Einheit bestimmt und im Ansprechen darauf eine Kommunikation ermöglicht wird, wobei im Ansprechen auf die bestimmte Position auch ein Prioritätsmaß ermittelt und die Datenübertragung von der mobilen, Daten austauschenden Einheit prioritätsgemäß ermöglicht wird, **dadurch gekennzeichnet, dass** eine mehrstufige Positionsbestimmung erfolgt, wobei als ein Positionsbestimmungsverfahren mit erhöhter Sicherheit ein satellitenbasiertes Positionsbestimmungsverfahren, insbesondere eine Positionsbestimmung mittels GPS vorgesehen ist, und eine Positionshistorie der mobilen Einheit aufgezeichnet wird und eine Übertragung nur freigegeben wird, wenn die Position, an der die Übertragung erfolgen sollte, über einen bestimmten Weg erreicht wurde.

2. Verfahren nach dem vorhergehenden Anspruch, **dadurch gekennzeichnet, dass** die Datenübertragung übertragungsratenbegrenzt erfolgt.

3. Verfahren nach einem der vorhergehenden Ansprüche, **dadurch gekennzeichnet, dass** die Übertragung über bandbreitenbegrenzende Kanäle erfolgt.

4. Verfahren nach einem der vorhergehenden Ansprüche, **dadurch gekennzeichnet, dass** die mobile Einheit eine Mehrzahl ortsfester Einheiten (2) passiert und die ortsfesten Einheiten mit einer Zentraleinheit kommunizieren.

5. Verfahren nach einem der vorhergehenden Ansprüche, **dadurch gekennzeichnet, dass** die mobile Einheit auf einem Personen-Transportmittel angeordnet ist und die mehreren ortsfesten Einheiten an Haltestellen angeordnet sind.

6. Verfahren nach einem der vorhergehenden Ansprüche, **dadurch gekennzeichnet, dass** die mobile Einheit auf einem Omnibus oder einer Bahn angeordnet sind.

7. Verfahren nach einem der vorhergehenden Ansprüche, **dadurch gekennzeichnet, dass** als mobile Einheiten Sicherheitstransporter, insbesondere Geldtransporter vorgesehen sind.

8. Verfahren nach einem der vorhergehenden Ansprüche, **dadurch gekennzeichnet, dass** die Übertragungspriorisierung eine Bestimmung eines Übertragungszeitraumes bzw. -punktes und/oder einer Übertragungsbandbreite umfasst.

## Claims

1. Method for securely controlling communication between at least one stationary unit (2) and at least one mobile data-exchanging unit (3), wherein a position of the mobile unit is determined and communication is made possible in response thereto, wherein a priority measure is determined in response to the position determined and data can be transmitted from the mobile data-exchanging unit according to the priority, **characterized in that** the position determination is carried out in several stages, wherein a satellite-based position determination method, particularly a position determination by means of GPS is provided as a position determination method with increased security, and a position history of the mobile unit is recorded and transmission is enabled only if the position at which the transmission was intended to take place has been reached via a particular path.

2. Method according to the preceding claim, **characterized in that** the data are transmitted with a limited transmission rate.

3. Method according to one of the preceding claims, **characterized in that** the transmission takes place via bandwidth-limited channels.

4. Method according to one of the preceding claims, **characterized in that** the mobile unit passes a multiplicity of stationary units (2) and the stationary units communicate with a central processing unit.

5. Method according to one of the preceding claims, **characterized in that** the mobile unit is arranged on a means of passenger transport and the several stationary units are arranged at stopping points.

6. Method according to one of the preceding claims, **characterized in that** the mobile unit is arranged on a bus or a train.

7. Method according to one of the preceding claims, **characterized in that** security vans, particularly armored cars, are provided as mobile units.

8. Method according to one of the preceding claims, **characterized in that** the prioritization of transmission comprises a determination of a transmission period or point in time and/or a transmission bandwidth.

## Revendications

1. Procédé de commande de communication sécurisée entre au moins une unité fixe (2) et au moins une unité mobile (3) échangeant des données, une position de l'unité mobile étant déterminée et en réponse, une communication étant rendue possible, une mesure de priorité étant également calculée en réponse à la position déterminée et la transmission de données à partir de l'unité mobile échangeant des données étant rendue possible en fonction de la priorité, **caractérisé en ce que** la position est déterminée à plusieurs niveaux, un procédé de détermination de la position présentant un niveau de sécurité accru prenant la forme d'un procédé de détermination de la position basé sur des satellites, notamment une détermination de la position par GPS, et un historique de position de l'unité mobile étant enregistré et une transmission n'étant autorisée que lorsque la position à laquelle la transmission devait se produire a été atteinte sur un trajet déterminé.

2. Procédé selon la revendication précédente, **caractérisé en ce que** la transmission de données est limitée par la vitesse de transmission.

3. Procédé selon l'une quelconque des revendications précédentes, **caractérisé en ce que** la transmission se produit par le biais de canaux de limitation de largeur de bande.

4. Procédé selon l'une quelconque des revendications précédentes, **caractérisé en ce que** l'unité mobile passe devant une pluralité d'unités fixes (2) et que les unités fixes communiquent avec une unité centrale.

5. Procédé selon l'une quelconque des revendications précédentes, **caractérisé en ce que** l'unité mobile est disposée sur un moyen de transport de personnes et que les multiples unités fixes sont disposées aux points d'arrêt.

6. Procédé selon l'une quelconque des revendications précédentes, **caractérisé en ce que** l'unité mobile est disposée sur un omnibus ou sur un train.

7. Procédé selon l'une quelconque des revendications précédentes, **caractérisé en ce que** les unités mobiles envisagées sont des transporteurs sécurisés, notamment des transporteurs de fonds.

8. Procédé selon l'une quelconque des revendications précédentes, **caractérisé en ce que** la priorisation de la transmission comprend une détermination d'une durée et/ou d'un point de transmission et/ou une largeur de bande de transmission.
